# EUROPEAN PATENT APPLICATION

(11) **EP 2 144 423 A1**
(43) Date of publication of application: **13.01.2010**
(21) Application number: 08738561.3
(22) Date of filing: 11.04.2008
(51) Int. Cl.: H04M 1/02

(54) **ROTATION TYPE PORTABLE TERMINAL**

(30) Priority: 25.04.2007 JP 2007115245
(71) Applicant: Nec Corporation, Tokyo 108-8001 (JP)
(72) Inventor: WASHIYAMA, Yasuhiro, Tokyo 108-8001 (JP)
(74) Representative: Betten & Resch
(86) International application number: PCT/JP2008/000955
(87) International publication number: WO 2008/132800

(57) **Abstract**

A portable terminal includes a first housing (1) having a display unit (3), and a second housing (2) having a first and a second operation unit (4a, 4b) located on the respective sides thereof, rotatably connected about a rotation shaft (5) located generally at a center of the housings, and the first housing (1) and the second housing (2) are generally the same in size. Such structure allows hiding the second housing (2) when carrying the portable terminal or when complicated manipulation is not required, thereby enabling reducing the overall size of the portable terminal, yet providing a large screen on the first housing (1). Rotating the housings enables using the operation unit at two separate locations, the first and the second operation unit (4a, 4b) on the second housing (2), or three separate locations including an auxiliary operation unit (3a) on the first housing (1), and the first and the second operation unit (4a, 4b), thus permitting using both hands to hold and manipulate the portable terminal.

## Description

### [TECHNICAL FIELD]

The present invention relates to a portable terminal, and more particularly to a rotation type portable terminal including a housing mainly including a display unit and another housing mainly including an operation unit, rotatably connected to each other.

### [BACKGROUND ART]

Conventional portable terminals such as a mobile phone have typically been constituted of a single housing on which both the display unit and the operation unit are provided, or of two housings foldably connected by means of a hinge, with the display unit provided on one housing and the operation unit on the other. Lately, however, the portable terminals of various different structures, such as a sliding type, have been proposed for improving the usability and adding distinctive features.

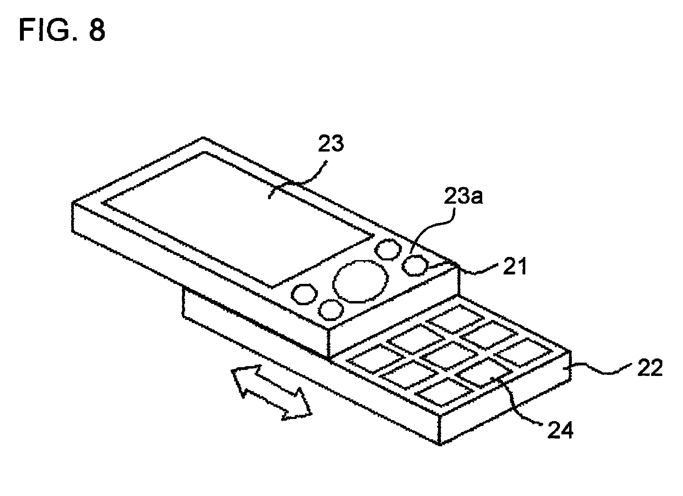

Fig. 8 is a perspective view showing a structure of a conventional sliding portable terminal. As shown in Fig. 8, the conventional sliding portable terminal includes a display-side housing 21 having a display unit 23 and an operation-side housing 22 having an operation unit 24, slidably connected to each other. The display-side housing 21 also includes an auxiliary operation unit 23a for performing simple manipulation.

To dandle such sliding portable terminal, the display-side housing 21 is superposed over the operation-side housing 22 when the portable terminal is simply carried or when complicated manipulation is not required, such as talking over the phone, checking e-mails, viewing a TV program or a web screen, or listening to music. On the other hand, when complicated manipulation has to be performed, for example inputting an e-mail or activating an application to play a game, the display-side housing 21 is slid so as to enable the use of the operation unit 24 of the operation-side housing 22, for using the portable terminal. Such sliding portable terminal can be found, for example, in the patented document 1 cited below.

[Patented document1] JP-A No.2004-13597

### [DISCLOSURE OF THE INVENTION]

The conventional sliding portable terminal has, however, such a drawback in usability that, when sliding the display-side housing 21 for manipulating the operation unit 24 on the operation-side housing 22, a lower portion of the operation unit 24 is inconvenient to be pressed because of being too far, and the first housing 21 acts as a wall disturbing the manipulation of an upper portion of the operation unit 24. Besides, the conventional sliding portable terminal is designed on the assumption that the operation unit 24 is handled with one hand, and hence cannot be stably held, which also degrades the usability.

The present invention has been accomplished in view of the foregoing problems, and an essential object of the present invention is to provide a rotation type portable terminal that offers improved usability of the operation unit.

According to the present invention, there is provided a rotation type portable terminal comprising an upper first housing including at least a display unit and a lower second housing including at least an operation unit, rotatably connected around a rotation shaft located at a generally central position of at least one of the housings; wherein the first housing and the second housing are generally the same in outer size; the operation unit includes a first operation unit and a second operation unit; and when the first housing is rotated relative to the second housing, the first operation unit is located on one side of the first housing, and the second operation unit is located on the other side opposite to the first operation unit across the first housing, thereby permitting operation of the portable terminal through the two operation units.

According to the present invention, the first housing may further include an auxiliary operation unit, thereby enabling operation through the three operation units, namely the auxiliary operation unit, the first operation unit, and the second operation unit, when the first housing is rotated relative to the second housing.

According to the present invention, the display unit on the first housing may include a touch panel, and the auxiliary operation unit may be displayed on the display unit.

Also, according to the present invention the rotation type portable terminal may further comprise a rotation detection unit that detects a rotation status of the first housing relative to the second housing; and a control unit; and the control unit may control the display unit, based on the rotation status detected by the rotation detection unit, so as to display the auxiliary operation unit when the first hosing is superposed on the second housing such that an outer edge of the second housing does not protrude from an outer edge of the first housing, and not to display the auxiliary operation unit when the first housing is rotated relative to the second housing.

Further, according to the present invention the rotation type portable terminal may includes a plurality of functions to be selectively performed; and the first housing may include a touch panel that serves as the first operation unit and as the second operation unit, and a control unit; and the control unit may detect a selected function, and determine a key layout of the first operation unit and the second operation unit, according to the detected function.

Thus, the rotation type portable terminal including the first housing having at least the display unit, and the second housing having at least the first operation unit and the second operation unit located on the respective sides, set to relatively rotate around the rotation shaft, can upgrade the usability of the operation unit.

### [BRIEF DESCRIPTION OF THE DRAWINGS]

The above and other objects, features and advantages will become more apparent through the following preferred embodiments, and the accompanying drawings listed hereunder.

Fig. 1(a) is an overall perspective view showing a rotation type portable terminal according to a first embodiment of the present invention, with housings superposed on each other, and 1(b) is an exploded perspective view thereof;
Fig. 2 is a block diagram showing a structure of the rotation type portable terminal according to the first embodiment of the present invention;
Figs. 3(a) and 3(b) are upper plan views showing the rotation type portable terminal according to the first embodiment of the present invention, rotated for use;
Fig. 4(a) is an overall perspective view showing a rotation type portable terminal according to a second embodiment of the present invention, with housings superposed on each other, and 4(b) is an exploded perspective view thereof;
Fig. 5 is a block diagram showing a structure of the rotation type portable terminal according to the second embodiment of the present invention;
Figs. 6(a) and 6(b) are upper plan views showing the rotation type portable terminal according to the second embodiment of the present invention, rotated for use;
Figs. 7(a) and 7(b) are upper plan views showing the rotation type portable terminal according to the second embodiment of the present invention, rotated for use; and
Fig. 8 is an overall perspective view showing a conventional sliding portable terminal, slid for use.

### [BEST MODE FOR CARRYING OUT THE INVENTION]

Hereunder, embodiments of the present invention will be described referring to the drawings.

As stated in the paragraph of the background art, the portable terminals of various structures have been proposed for improving the usability and adding distinctive features, such as the sliding portable terminal that includes the display-side housing with the display unit and the operation-side housing with the operation unit which are slidably connected. The conventional sliding portable terminal is, however, intended to be handled with one hand, and hence the keys at the peripheral position of the operation unit are difficult to be pressed, and besides the portable terminal cannot be stably held and lacks in safety.

To minimize such problem, the operation unit may be provided on the respective sides of the operation-sidle housing, and the display-side housing may be made smaller in size than the operation-side housing and rotatably connected thereon on, however such structure with the display unit made smaller incurs the disadvantage of degraded visibility of the screen.

Reviewing now the mode of use of the portable terminal, since complicated manipulation is not required but simple manipulation is sufficient for talking over the phone, checking e-mails, viewing a TV program or a web screen, or listening to music, it is not mandatory that the operation unit of the operation-side housing is exposed.

Accordingly, the present invention adopts the structure that the portable terminal includes a first housing having at least a display unit and a second housing having at least a first operation unit and a second operation unit located on the respective sides thereof, rotatably connected around a rotation shaft located at a generally central position of at least one of the housings, and the first housing and the second housing are generally the same in outer size. Such structure allows superposing the first housing on the second housing so that the second housing is hidden, when the potable terminal is simply being carried or complicated manipulation is not required, thereby enabling reducing the overall size of the portable terminal, and still securing a large area for the screen on the first housing. On the other hand, when the housings are relatively rotated, the operation unit becomes usable at two locations, namely the first operation unit and the second operation unit on the second housing (or three locations including the auxiliary operation unit on the first housing, and the first operation unit and the second operation unit on the second housing), which permits using both hands to hold and manipulate the portable terminal, thereby upgrading the usability, safety and visibility.

### [First embodiment]

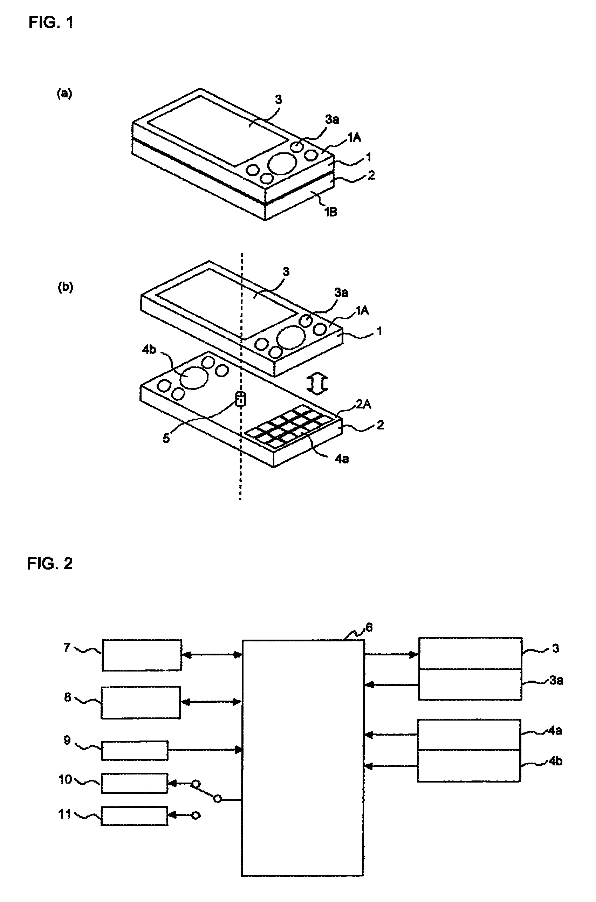

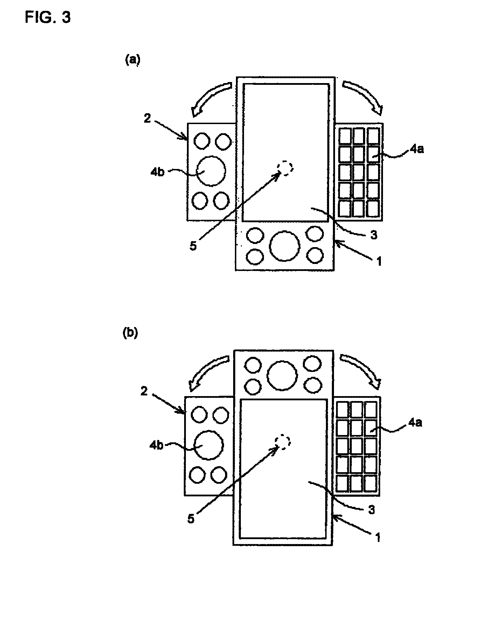

To give further details on the embodiment of the present invention, the rotation type portable terminal according to a first embodiment of the present invention will be described, referring to Figs. 1(a) to 3(b). Figs. 1(a) and 1(b) schematically depict the structure of the rotation type portable terminal according to this embodiment, in which Fig. 1(a) is a perspective view showing the state that the housings are superposed on each other, and 1(b) is a disassembled perspective view thereof. Fig. 2 is a block diagram showing the structure of the rotation type portable terminal according to this embodiment. Figs. 3(a) and 3(b) are upper plan views showing the mode of use of the rotation type portable terminal according to this embodiment.

As shown in Figs. 1(a) and 1(b), the rotation type portable terminal according to this embodiment is a mobile phone, and includes an upper housing (hereinafter, first housing 1) and a lower housing (hereinafter, second housing 2), and a rogation shaft 5 that rotatably connects the first housing 1 and the second housing 2.
The first housing 1 includes a display unit 3 comprising a liquid crystal display (LCD) or an organic electroluminescence (EL) display, an auxiliary operation unit 3a including an arrow key, a special function key and so on, and a first housing body 1A on which those components are provided.
The first housing body 1A is of a rectangular shape, and includes the display unit 3 and the auxiliary operation unit 3a located on its upper face.
The second housing 2 includes a first operation unit 4a constituted of an arrow key, a special function key, an input key and so on, a second operation unit 4b, and a second housing body 2A on which the operation units 4a, 4b are provided.
The second housing body 2A is of a rectangular shape, and includes the first operation unit 4a and the second operation unit 4b located on its upper face. Accordingly, when the first housing 1 is completely superposed on the second housing 2 such that the outer edge of the second housing 2 does not protrude from the outer edge of the first housing 1, the first operation unit 4a and the second operation unit 4b are hidden by the first housing 1, and not exposed.
Here, the first housing 1 and the second housing 2 are generally the same in outer size.
The state that the housings are superposed on each other herein means the state that the housings are superposed such that the outer edge of the second housing 2 does not protrude from the outer edge of the first housing 1 as shown in Fig. 1(a), and the state that the housings are relatively rotated herein means the state that either the first housing 1 or the second housing 2 is made to rotate from the state of Fig. 1(a), so that the outer edge of the second housing 2 protrudes from the outer edge of the first housing 1, as shown in Fig. 3.

As shown in Fig. 2, the first housing 1 or the second housing 2 includes a wireless communication unit 7 that transmits and receives wireless data for performing a phone call, communication through a TV phone or e-mail transmission/reception, a random access memory 8 that stores therein the programs for activating the portable terminal, ID information, phone numbers and so on, a microphone 9 for inputting a voice, a receiver 10 and a speaker 11 that outputs a voice or a ring tone, and a control unit (CPU) 6 that controls the operation of the former components.

Although the first operation unit 4a and second operation unit 4b are given different key layouts in Fig. 1(b), these operation units may have the same key layout, and the keys may be symmetrically aligned. Also, though the auxiliary operation unit 3a is provided on the first housing 1 side as shown in Figs. 1(a) and 1(b), thus to permit simple manipulation with the first housing 1 and the second housing 2 superposed on each other, the auxiliary operation unit 3a may be omitted to thereby allocate the entire region on the first housing 1 to the display unit 3.

The rotation shaft 5 normally includes a shaft and a bearing, however the structure is not particularly limited as long as the first housing 1 and the second housing 2 can be rotatably connected, and the attachment method of the rotation shaft 5 to the first housing 1 or the second housing 2 is not particularly limited either. It should also be noted that Fig. 2 represents a basic structure of the portable terminal according to this embodiment, and the portable terminal may further include a digital camera unit for shooting a still image or a moving image, a reception unit for receiving a TV or radio program, a sound source for replaying music, and a radio frequency identification (RFID) unit for data communication based on electromagnetic coupling or electromagnetic induction, in addition to the structure shown in Fig. 2.

The rotation type portable terminal thus constructed enables the use thereof with the first housing 1 and the second housing 2 generally completely superposed on each other such that the outer edge of the second housing 2 does not protrude from the outer edge of the first housing 1 as shown in Fig. 1(a), when the portable terminal is being carried or when complicated manipulation is not required, such as when talking over the phone, checking e-mails, viewing a TV program or a web screen, or listening to music. In this mode of use, the overall size of the rotation type portable terminal can be made smaller and compact.

On the other hand, when complicated manipulation has to be performed, for example, inputting a phone number or an e-mail, or activating an application and playing a game, the first housing 1 can be rotated around the rotation shaft 5 as shown in Fig. 3(a) to thereby use the portable terminal. In this mode of use, the first operation unit 4a of the second housing 2 is located on one side of the first housing 1, and the second operation unit 4b is located on the other side across the first housing 1.
Such configuration enables operating the two operation units, namely the first operation unit 4a and the second operation unit 4b of the second housing 2 (or three operation units including the auxiliary operation unit 3a of the first housing 1, and the first operation unit 4a and the second operation unit 4b of the second housing 2) by holding the first operation unit 4a with one hand and the second operation unit 4b with the other hand, thereby upgrading the usability and enabling safe and efficient manipulation.

In the case of activating an application and playing a game, in particular, the portable terminal can be operated with the same feeling as operating a controller of a game console, and therefore even a complicated game can be enjoyed.

Although Fig. 3(a) illustrates the state that the first housing 1 is rotated clockwise by 90 degrees from the state shown in Fig. 1(a), the first housing 1 may be rotated in a desired direction, for example counterclockwise by 90 degrees as shown in Fig. 3(b). Also, although the first housing 1 is rotated by 90 degrees in Fig. 3(a), the first housing 1 may be rotated by any other angle as desired, for example in the case where it becomes easier to manipulate the portable terminal by bringing the auxiliary operation unit 3a of the first housing 1 and the first operation unit 4a or the second operation unit 4b of the second housing 2 closer to each other. Further, a recess and a protrusion may be provided at a corresponding position on the first housing 1 and the second housing 2 respectively, such that the recess and the protrusion are engaged at a predetermined angle, to thereby prevent the first housing 1 from freely rotating during the manipulation.

The rotation type portable terminal thus constructed according to this embodiment offers the following advantages.

The rotation type portable terminal according to this embodiment significantly upgrades the usability, for the following reason. The first housing 1 having the display unit 3 and the second housing 2 having the first operation unit 4a and the second operation unit 4b are generally the same in outer size. And the first housing 1 and the second housing 2 are rotatably connected around the rotation shaft 5 located at a generally central position of the housings. Accordingly, when the first housing 1 is rotated, the first operation unit 4a is located opposite to the second operation unit 4b, across the first housing 1. Such orientation enables holding the portable terminal with both hands to manipulate the same. Holding the operation unit with both hands improves the stability in retaining the portable terminal, thereby preventing the portable terminal from dropping even when performing complicated manipulation such as writing a mail or playing a game, thus also upgrading the safety. Also, the configuration that permits securely holding with both hands makes it easier to manipulate the operation unit, thereby increasing the inputting speed for writing a mail.

In this embodiment, since the first housing 1 includes the auxiliary operation unit 3a, the rotation type portable terminal can still be utilized, even when the first housing 1 and the second housing 2 are completely superposed on each other. The auxiliary operation unit 3a can be manipulated so as to answer a received call or make a call, with the first housing 1 and the second housing 2 completely superposed on each other.

Further, since the auxiliary operation unit 3a can also be used in addition to the first operation unit 4a and the second operation unit 4b when the first housing 1 is rotated, even complicated manipulation can be performed, holding the rotation type portable terminal with both hands.

### [Second embodiment]

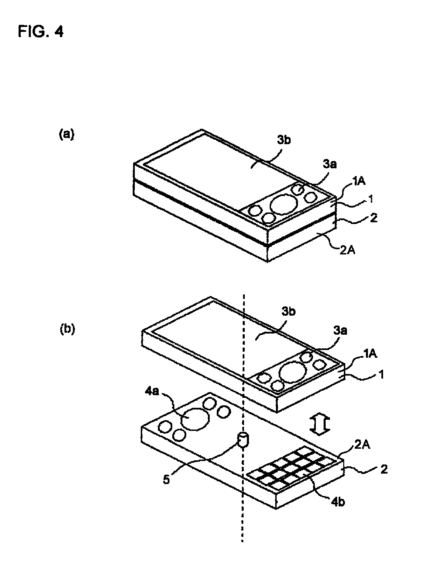

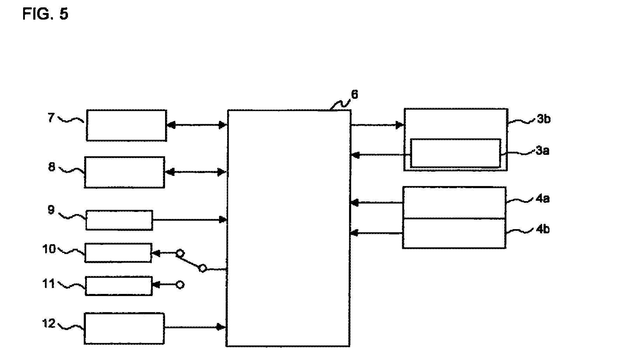

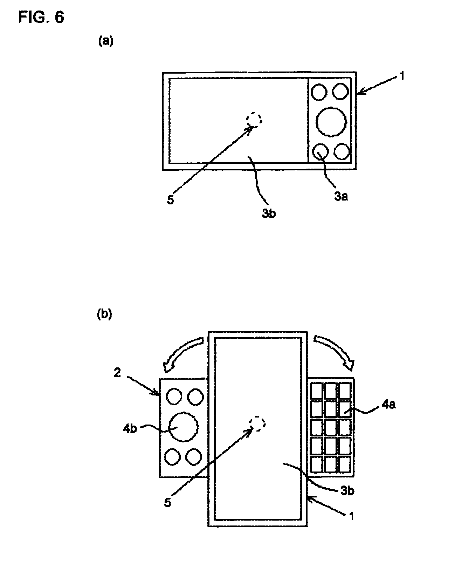

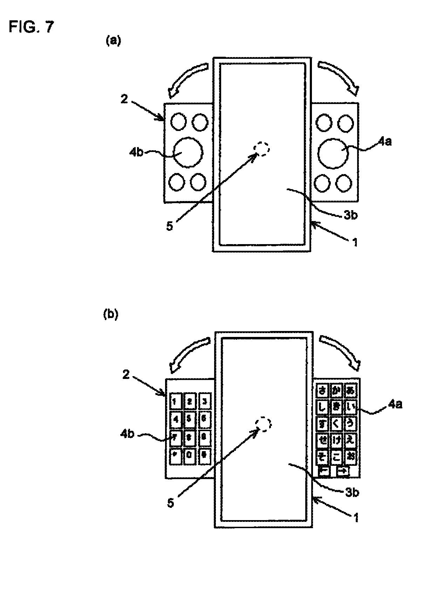

Referring now to Figs. 4(a) to 7(b), a rotation type portable terminal (rotation type mobile phone) according to a second embodiment of the present invention will be described. Figs. 4(a) and 4(b) schematically depict the structure of the rotation type portable terminal according to this embodiment, in which Fig. 4(a) is a perspective view showing the state that the housings are superposed on each other, and 4(b) is a disassembled perspective view thereof. Fig. 5 is a block diagram showing the structure of the rotation type portable terminal according to this embodiment. Figs. 6(a) to 7(b) are upper plan views showing the mode of use of the rotation type portable terminal according to this embodiment.

According to the first embodiment, the first housing 1 includes the display unit 3 and the auxiliary operation unit 3a, so as to enable performing simple manipulation with the first housing 1 generally completely superposed on the second housing 2. Under such structure, it is difficult to enlarge the display unit 3 all over the first housing 1. In this embodiment, accordingly, the display unit of the first housing 1 is constituted as a touch panel display unit 3b as shown in Figs. 4(a) and 4(b), so as to utilize the touch panel display unit 3b also as the auxiliary operation unit 3a, if necessary. For example, a transparent switch unit such as a touch panel, including elements aligned in a matrix row for performing ON/OFF control by contact or press, may be implemented on at least a part of the front face of an LCD or an organic EL display, to thereby constitute the touch panel display unit 3b.

Here, the user may manipulate the first operation unit 4a or the second operation unit 4b to instruct whether to display the auxiliary operation unit 3a in the touch panel display unit 3b, however it is preferable that the touch panel display unit 3b is set to display the auxiliary operation unit 3a when the first housing 1 and the second housing 2 are superposed on each other, because the auxiliary operation unit 3a has to be utilized for a certain type of manipulation, while it is preferable, when the first housing 1 is rotated, that the touch panel display unit 3b is utilized as a large-screen display without displaying the auxiliary operation unit 3a, because the portable terminal can be operated through the first operation unit 4a and the second operation unit 4b of the second housing 2.

Accordingly, as shown in Fig. 5, the rotation type portable terminal may include a rotation detection unit 12 that detects the rotation status of the first housing 1 and the second housing 2, so that the CPU (control unit) 6 controls the display unit 3 so as not to display the auxiliary operation unit 3a in the case where the CPU 6 decides that the housings are rotated. In the case where the CPU 6 decides that the housings are not rotated (the second housing 2 barely protrudes from the outer edge of the first housing 1 in a plan view), the CPU 6 causes the display unit 3 to display the auxiliary operation unit 3a. Although the specific structure of the rotation detection unit 12 is not particularly limited, for example a contact may be provided on a corresponding position of the first housing 1 and the second housing 2 respectively, so that the contacts are brought into contact at a predetermined angle, to thereby detect the rotation status based on fluctuation of resistance, fluctuation of voltage, or fluctuation of current.

The rotation type portable terminal thus constructed can still accept simple manipulation despite that the first operation unit 4a and the second operation unit 4b of the second housing 2 are hidden, because the auxiliary operation unit 3a is displayed at least in a part of the touch panel display unit 3b as shown in Fig. 6(a), when the first housing 1 and the second housing 2 are superposed on each other.

On the other hand, when the first housing 1 is rotated around the rotation shaft 5 as shown in Fig. 6(b), the touch panel display unit 3b of the first housing 1 does not display the auxiliary operation unit 3a, and therefore the entirety of the touch panel display unit 3b can be utilized as a large-screen display and thus the visibility of the screen can be upgraded.

Especially when viewing a one-segment TV broadcasting or enjoying a game, a spectacular TV screen or game screen can be displayed, and information can be accurately transmitted when utilizing the web, and also an erroneous input can be prevented when writing an e-mail.

Although Fig. 6(b) illustrates the state that the first housing 1 is rotated by 90 degrees, the rotating direction and the rotating angle may be determined as desired, and for example the display of the auxiliary operation unit 3a may be turned off upon rotating the first housing 1 by a predetermined angle, or turned off in the case where the auxiliary operation unit 3a is left untouched for a predetermined time after rotating the first housing 1 by 90 degrees.

Also, the foregoing description refers to the case where the first operation unit 4a and the second operation unit 4b of the second housing 2 are actually constituted of real-life keys, the second housing 2 may also include a touch panel provided on an LCD or an organic EL display screen, so that the CPU 6 recognizes the selected function and displays the operation unit appropriate for the selected function.

It is preferable that all the keys are displayed in a normal operation, however for playing a game, for example, providing a fewer number of keys is more convenient, and in such a case the layout of the operation unit can be customized for the game, such as displaying only the arrow keys and the special function keys on both of the first operation unit 4a and the second operation unit 4b, as shown in Fig. 7(a).

Also, since inputting becomes easier when writing an e-mail if numerical keys and character keys are separately located, the layout of the operation unit can be customized for writing the mail, such as allocating the numerical keys to one of the first operation unit 4a and the second operation unit 4b and the character keys to the other, as shown in Fig. 7(b).
Once the rotation detection unit 12 detects that the user has rotated the first housing 1 by a predetermined angle, the CPU 6 causes the display unit 3b to display the functions installed in the rotation type portable terminal (for example, the mail function, game function and so forth). The user touches the display unit 3b to thereby select the function to be performed. The CPU 6 of the rotation type portable terminal receives the information of the selected function, and controls the display on the first operation unit 4a and the second operation unit 4b, so as to display the key layout appropriate for the selected function.

The second embodiment thus arranged offers the following advantages.
The second embodiment upgrades the visibility of the screen. That is because, since the display unit 3b ofn the first housing 1 is given the touch panel function, a part of the display unit 3b can be utilized as the auxiliary operation unit 3a when the housings are superposed on each other, and the size of the display unit 3b can be enlarged when the housings 1, 2 are relatively rotated.

Also, the screen size on the first housing 1 is variable according to the rotation status of the housings 1, 2, and therefore the display unit 3b can be utilized as a large-screen display, and yet the compact size of the rotation type portable terminal can be maintained.

Further, the touch panel function may be given to the operation units 4a, 4b of the second housing 2, to thereby modify the layout of the operation units 4a, 4b according to the selected function, when the housings 1, 2 are relatively rotated. Such arrangement upgrades the usability of the rotation type portable terminal.

Although the forgoing embodiment represent the case where the structure of the present invention is applied to a mobile phone, the present invention is equally applicable, without limitation to the foregoing embodiments, to any portable device including a first housing mainly including a display unit and a second housing mainly including an operation unit, rotatably connected to each other, for example a game console, a personal digital assistant (PDA), an electronic dictionary, and so forth.
This application claims priority based on Japanese patent application No. 2007-115245 filed on April 25, 2007, the content of which is incorporated hereinto by reference in its entirety.

## Claims

1. A rotation type portable terminal, comprising an upper first housing including at least a display unit and a lower second housing including at least an operation unit, rotatably connected around a rotation shaft located at a generally central position of at least one of said housings;
wherein said first housing and said second housing are generally the same in outer size;
said operation unit includes a first operation unit and a second operation unit; and
when said first housing is rotated relative to said second housing, said first operation unit is located on one side of said first housing, and said second operation unit is located on the other side opposite to said first operation unit across said first housing, thereby permitting operation of said portable terminal through said two operation units.

2. The rotation type portable terminal according to claim 1,
wherein said first housing further includes an auxiliary operation unit,
thereby enabling operation through three operation units including said auxiliary operation unit, said first operation unit, and said second operation unit, when said first housing is rotated relative to said second housing.

3. The rotation type portable terminal according to claim 2,
wherein said display unit of said first housing includes a touch panel; and
said auxiliary operation unit is displayed on said display unit.

4. The rotation type portable terminal according to claim 3,
further comprising a rotation detection unit that detects a rotation status of said first housing relative to said second housing; and a control unit;
wherein said control unit controls said display unit, based on said rotation status detected by said rotation detection unit,
so as to display said auxiliary operation unit when said first housing is superposed on said second housing such that an outer edge of said second housing does not protrude from an outer edge of said first housing, and
not to display said auxiliary operation unit when said first housing is rotated relative to said second housing.

5. The rotation type portable terminal according to any of claims 1-4,
comprising a plurality of functions to be selectively performed;
wherein said first housing includes a touch panel that serves as said first operation unit and as said second operation unit; and
said control unit; and
said control unit detects a selected function, and determines a key layout of said first operation unit and said second operation unit, according to said detected function.
